# EUROPÄISCHE PATENTSCHRIFT

(11) **EP 4 440 918 B1**
(45) Veröffentlichungstag und Bekanntmachung des Hinweises auf die Patenterteilung: **27.08.2025**
(21) Anmeldenummer: 22822973.8
(22) Anmeldetag: 29.11.2022
(51) Int. Cl.: B62M 6/40, B62M 6/65, B62M 11/14

(54) **FAHRRADANTRIEB UND FAHRRAD**
BICYCLE DRIVE AND BICYCLE
ENTRAÎNEMENT DE BICYCLETTE ET BICYCLETTE

(30) Priorität: 30.11.2021 DE 102021213505
(43) Veröffentlichungstag der Anmeldung: 09.10.2024
(73) Patentinhaber: ZF Friedrichshafen AG, 88046 Friedrichshafen (DE)
(72) Erfinder: HAUFF, Daniel, 88212 Ravensburg (DE); SOMMER, Marc, 88212 Ravensburg (DE)
(74) Vertreter: ZF Friedrichshafen AG
(86) Internationale Anmeldenummer: PCT/EP2022/083558
(87) Internationale Veröffentlichungsnummer: WO 2023/099423

(56) Entgegenhaltungen:
- DE-A1- 102019 208 536

## Beschreibung

### Technisches Gebiet

Die vorliegende Erfindung betrifft einen Fahrradantrieb mit Elektromaschine und einem Planetengetriebe. Zudem betrifft die Erfindung ein Fahrrad mit einem solchen Fahrradantrieb.

### Stand der Technik

Aus dem Stand der Technik sind Fahrradantriebe mit verschiedenen Getriebekonfigurationen bekannt. Bei Fahrrädern ist es wünschenswert, unterschiedliche Getriebeübersetzungen mit geringem Aufwand und Gewicht bereitstellen zu können, um effizient Fahren zu können. Bei vielen Fahrrädern, wie zum Beispiel Stadträdern, ist eine kostengünstige Gestaltung häufig wichtiger als eine hohe Anzahl verschiedenere Gänge. Bei Fahrradantrieben ist zudem eine motorische Antriebsunterstützung des Fahrradfahrers häufig gewünscht. Diese soll ebenfalls effizient eine Antriebsleistung am Antrieb bereitstellen, um beispielsweise mit einer Batterie eine möglichst hohe Reichweite zu erzielen. Insgesamt sollen Fahrradantriebe leicht, kostengünstig und robust sein.

In der DE 10 2015 100 676 B3 ist eine Antriebsbaugruppe für ein Fahrrad mit einem elektrischen Hilfsantrieb beschrieben, welche ein Wellgetriebe aufweist.

Die DE 10 2019 208 536 A1 , welche die Präambel des Anspruchs 1 zeigt, beschreibt ein Tretlagergetriebe in Planetenbauweise für
ein Pedelec.

### Darstellung der Erfindung

Ein erster Aspekt betrifft einen Fahrradantrieb. Der Fahrradantrieb kann dazu ausgebildet sein, eine Muskelkraft an ein angetriebenes Laufrad des Fahrrads zu übertragen. Der Fahrradantrieb kann dazu ausgebildet sein, in einem elektrisch antreibbaren Fahrrad, wie einem Pedelec, verbaut zu werden. Der Fahrradantrieb kann in einem Rahmen des Fahrrads verbaut werden, beispielsweise wenigstens teilweise in einem Unterrohr, einem Tretlagergehäuse und alternativ oder zusätzlich in einem Sitzrohr des Fahrrads. Es kann sich ein niedriger Schwerpunkt ergeben. Zudem kann so eine rotierende Masse des Fahrrads, beispielsweise im Vergleich zu einem Fahrradantrieb mit Nabenmotor, besonders klein sein.

Der Fahrradantrieb weist eine Elektromaschine auf. Die Elektromaschine weist eine Abtriebswelle auf. An der Abtriebswelle kann von der Elektromaschine eine motorische Antriebskraft bereitgestellt werden. Der Fahrradantrieb kann dazu ausgebildet sein, ein Antreiben durch Muskelkraft lediglich zu unterstützen und das Fahrrad nicht alleine anzutreiben. Die Abtriebswelle kann einen Rotor der Elektromaschine ausbilden oder mit diesem drehfest verbunden sein. Eine Elektromaschine kann beispielsweise eine Asynchronmaschine oder Synchronmaschine sein. Eine Elektromaschine kann dazu ausgebildet sein, elektrische Energie in mechanische Energie zu wandeln. Optional kann eine Elektromaschine auch zur Rekuperation ausgebildet sein.

Der Fahrradantrieb weist ein Planetengetriebe auf. Das Planetengetriebe weist eine Getriebeabtriebswelle, ein erstes Schaltelement, ein Freilaufelement und einen Planetenradsatz mit einem Sonnenrad, einem Planetenträger und einem Hohlrad auf. Das Sonnenrad, der Planetenträger und das Hohlrad können die jeweiligen Drehelemente des Planetenradsatzes bilden. An dem Planetenträger können ein oder mehrere Planetenräder drehbar gelagert sein. Beispielsweise können an dem Planetenträger drei Planetenräder drehbar gelagert sein. Jedes Planetenrad kann beispielsweise mit dem Sonnenrad und dem Hohlrad kämmen. Der Planetenradsatz kann auch mehrere Sätze von drehbar an dem Planetenträger gelagerten Planetenrädern aufweisen, beispielsweise bei einer Konfiguration als Plus-Planetenradsatz. Der Planetenradsatz kann beispielsweise als Minus-Planetenradsatz oder Plus-Planetenradsatz ausgebildet sein. Der Fahrradantrieb kann dazu ausgebildet sein, ein Drehmoment von der Elektromaschine über das Planetengetriebe an die Getriebeabtriebswelle und alternativ oder zusätzlich ein Laufrad zu übertragen. Das Planetengetriebe wird beispielsweise so betrieben, dass sich insgesamt eine positive Übersetzung ergibt.

Die Getriebeabtriebswelle kann beispielsweise mit einem der Drehelemente permanent oder schaltbar drehfest verbunden sein. Die Getriebeabtriebswelle kann einstückig mit einem der Drehelemente, wie beispielsweise dem Hohlrad, ausgebildet sein. Die Getriebeabtriebswelle kann dazu ausgebildet sein, ein Drehmoment an ein Laufrad des Fahrrads zu übertragen. Beispielsweise kann die Getriebeabtriebswelle mit dem Laufrad mittels einer Kette oder eines Riemens mechanisch wirkverbunden sein. Die Getriebeabtriebswelle kann dafür beispielsweise ein Kettenblatt oder eine Riemenscheibe ausbilden.

Der Planetenradsatz kann beispielsweise koaxial mit der Abtriebswelle der Elektromaschine angeordnet sein. Die Getriebeabtriebswelle kann beispielsweise koaxial mit der Abtriebswelle der Elektromaschine angeordnet sein. Es ergibt sich eine kompakte Anordnung, bei welcher eine Drehmomentübertragung einfach realisiert werden kann.

Das erste Schaltelement kann beispielsweise als formschlüssiges oder reibschlüssiges Schaltelement ausgebildet sein. Das Schaltelement kann durch dessen Betätigung zwei Elemente drehfest miteinander verbinden. Unbetätigt kann dagegen eine Drehmomentübertragung zwischen zwei Elementen über das Schaltelement unterbrochen sein. Das Schaltelement kann als selbsttätig schaltendes Schaltelement oder aktiv schaltbares Schaltelement ausgebildet sein. Ein aktiv schaltbares Schaltelement kann beispielsweise von einem Benutzer und alternativ oder zusätzlich durch einen Aktuator verstellt werden, um zwischen dessen jeweiligen Schaltzuständen zu wechseln. Für die Betätigung jeweiliger Schaltelemente kann der Fahrradantrieb einen Schalthebel aufweisen. Beispielsweise sperrt ein Freilaufelement als selbsttätig schaltendes Schaltelement in Abhängigkeit von einer relativen Drehrichtung, um zwei Elemente miteinander zu verbinden. Das Freilaufelement stellt also eine besondere Art eines Schaltelements dar.

Die Abtriebswelle ist mit dem Planetenträger permanent drehfest verbunden. Die Elektromaschine kann somit eine Antriebskraft über den Planetenträger in das Getriebe einleiten. Der Planetenträger kann eine Eingangswelle des Planetengetriebes bilden. Das Sonnenrad ist mittels des Schaltelements festsetzbar. Ein festgesetztes Drehelement ist beispielsweise mit einem stationären Bauteil, wie einem Gehäuse, drehfest verbunden. Ein festgesetztes Drehelement kann durch die Rotation anderer Drehelemente des Planetenradsatzes nicht mehr in Rotation versetzt werden. Durch das Festsetzen und Freigeben des Sonnenrads können unterschiedliche Gänge bei dem Planetengetriebe bereitgestellt werden. Der Planetenträger ist mit dem Hohlrad mittels des Freilaufelements drehfest verbindbar.

Sofern das Sonnenrad nicht festgesetzt ist und eine Antriebskraft durch die Elektromaschine bereitgestellt wird, befindet sich das Freilaufelement in einem Sperrrichtungszustand. Der Planetenradsatz wird so verblockt. In diesem Zustand drehen das Sonnenrad, der Planetenträger und das Hohlrad mit der gleichen Geschwindigkeit, ebenso wie die Abtriebswelle der Elektromaschine und die Getriebeabtriebswelle. Es ergibt sich beispielsweise eine Übersetzung von 1:1,8 dadurch, dass die Getriebeabtriebswelle einen größeren Wirkdurchmesser als die Abtriebswelle der Elektromaschine aufweist. Sofern das Sonnenrad festgesetzt ist, wird nur noch der Planetenträger angetrieben. Die Planetenräder rollen dann an dem Sonnenrad ab und treiben das Hohlrad an. Das Hohlrad dreht sich somit schneller als der Planetenträger. Durch ein solches Überholen des Planetenträgers wechselt das Freilaufelement selbsttätig von dem Sperrrichtungszustand in einen Überholtriebzustand. Die drehfeste Verbindung zwischen dem Planetenträger und dem Hohlrad mittels des Freilaufelements ist so aufgehoben. So kann eine höhere Übersetzung bereitgestellt werden. Mit einfachen Mitteln können so kompakt zwei Gänge für ein Pedelec bereitgestellt werden, wobei eine Schaltung zum Gangwechsel einfach realisiert werden kann.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Beispielsweise kann die mechanische Wirkverbindung einem Kämmen von korrespondierenden Verzahnungen von zwei Elementen entsprechen. Zwischen den Elementen können dabei weitere Elemente, beispielsweise eine oder mehrere Stirnradstufen, vorgesehen sein. Unter einer permanent drehfesten Verbindung zweier Elemente wird eine Verbindung verstanden, bei welcher die beiden Elemente zu allen bestimmungsgemäßen Zuständen des Getriebes im Wesentlichen starr miteinander gekoppelt sind. Hierunter fällt auch eine reibschlüssige Verbindung, bei welcher es zu einem gewollten oder ungewollten Schlupf kommen kann. Permanent drehfest verbundene Elemente können als drehfest miteinander verbundene Einzelkomponenten oder auch einstückig vorliegen. Eine Verbindung zweier Elemente über ein weiteres Element kann bedeuten, dass dieses weitere Element an einer mittelbaren Wirkverbindung der beiden Elemente beteiligt ist. Beispielsweise kann dieses Element im Kraftfluss zwischen diesen beiden Elementen angeordnet sein. Eine Verbindung zweier Elemente über zwei oder mehr weitere Elemente kann bedeuten, dass diese weiteren Elemente alle an einer mittelbaren Wirkverbindung der beiden Elemente beteiligt sind.

Das Planetengetriebe und auch der Fahrradantrieb können beispielsweise nur die hier beschriebenen Elemente aufweisen. Beispielsweise kann das Planetengetriebe und auch der Fahrradantrieb frei von weiteren Drehelementen und alternativ oder zusätzlich Schaltelementen sein.

In einer weiteren Ausführungsform des Fahrradantriebs ist es vorgesehen, dass das Planetengetriebe dazu ausgebildet ist, eine erste Getriebeübersetzung bereitzustellen, wenn das Sonnenrad mittels des ersten Schaltelements festgesetzt ist. Zudem kann das Planetengetriebe dazu ausgebildet sein, eine zweite Getriebeübersetzung bereitzustellen, wenn das Sonnenrad mittels des ersten Schaltelements freigegeben ist. Der Fahrradantrieb kann beispielsweise nur diese zwei Getriebeübersetzungen bereitstellen. Eine Getriebeübersetzung kann einem festen Verhältnis von Eingangsdrehzahl zu Ausgangsdrehzahl entsprechen. Optional kann der Fahrradantrieb zusätzlich dazu ausgebildet sein, einen Leerlauf bereitzustellen.

In einer weiteren Ausführungsform des Fahrradantriebs ist es vorgesehen, dass die Abtriebswelle mit dem Planetenträger mittels einer Verzahnung permanent drehfest verbunden ist. Es ergibt sich eine kompakte und robuste permanente drehfeste Verbindung. Beispielsweise kann die Abtriebswelle der Elektromaschine eine Außenverzahnung wenigstens in einem axialen Teilbereich aufweisen, mit welcher eine Innenverzahnung des Planetenträgers eingreift.

In einer weiteren Ausführungsform des Fahrradantriebs ist es vorgesehen, dass die Elektromaschine ein Elektromaschinengehäuse aufweist. In dem Elektromaschinengehäuse kann beispielsweise ein Stator und auch weitere Elektrokomponenten der Elektromaschine geschützt aufgenommen sein. Das Elektromaschinengehäuse kann wenigstens in einem Teilbereich rund ausgebildet sein. An diesem Teilbereich kann das Planetengetriebe radial außen wenigstens teilweise gelagert sein. Das Planetengetriebe kann so einfach auf die Elektromaschine aufgesetzt werden. Alternativ oder zusätzlich kann der Fahrradantrieb ein Planetengetriebegehäuse aufweisen. Das Planetengetriebegehäuse und das Elektromaschinengehäuse können auch ein gemeinsames Gehäuse bilden. Ein Gehäuse des Planetengetriebes kann beispielsweise durch ein Hohlrad oder ein dazu separates Bauteil gebildet sein.

Das Sonnenrad kann mittels des ersten Schaltelements an dem Elektromaschinengehäuse festsetzbar sein. Dadurch kann der Fahrradantrieb als Baugruppe weitestgehend unabhängig von einer Gestaltung des Fahrradrahmens bereitgestellt werden. Alternativ kann das Sonnenrad mittels des ersten Schaltelements beispielsweise an einem stationären Bauteil des Fahrradrahmens oder einem Gehäuse des Planetengetriebes festsetzbar sein.

In einer weiteren Ausführungsform des Fahrradantriebs ist es vorgesehen, dass das Sonnenrad mittels eines Wälzlagers an dem Elektromaschinengehäuse drehbar gelagert ist. Das Sonnenrad kann beispielsweise radial außenseitig an dem Elektromaschinengehäuse gelagert sein. In dem Wälzlager kann das erste Schaltelement für eine kompakte Bauweise integriert sein. Das Wälzlager kann beispielsweise als Rollenlager ausgebildet sein. Durch das Lagern des Sonnenrads an dem Elektromaschinengehäuse kann der Fahrradantrieb als Baugruppe weitestgehend unabhängig von einer Gestaltung des Fahrradrahmens bereitgestellt werden.

Das Hohlrad kann an dem Elektromaschinengehäuse drehbar gelagert sein. Auch hierdurch kann einfacher eine vormontierte Baugruppe für ein Fahrrad bereitgestellt werden. Das Hohlrad kann beispielsweise radial außenseitig an dem Elektromaschinengehäuse gelagert sein. Alternativ oder zusätzlich kann das Hohlrad an dem Fahrradrahmen gelagert sein, beispielsweise radial innenseitig an einem Tretlagergehäuse und alternativ oder zusätzlich einer Motorhalterung. Dadurch kann das Hohlrad zusätzlich das Planetengetriebe und alternativ oder zusätzlich die Elektromaschine abstützen.

In einer weiteren Ausführungsform des Fahrradantriebs ist es vorgesehen, dass die Getriebeabtriebswelle mittels des Freilaufelements an dem Planetenträger gelagert ist. Beispielsweise kann das Freilaufelement als Wälzlager ausgebildet sein oder ein Wälzlager aufweisen. Das Freilaufelement kann in diesem Wälzlager integriert sein. Alternativ oder zusätzlich kann auch das Hohlrad mittels des Freilaufelements an dem Planetenträger gelagert sein. Das Freilaufelement kann so zwei Funktionen kostengünstig und kompakt vereinen: Die Funktion einer Lagerung und eines selbsttätig schaltenden Schaltelements. Durch das Lagern der Getriebeabtriebswelle an dem Planetenträger mittels des Freilaufelements können jeweilige Kippkräfte auf den Planetenradsatz vermindert werden. Zudem kann eine Bauweise, bei welchem die Getriebeabtriebswelle nicht einteilig mit dem Hohlrad ausgebildet ist, so robuster sein und eine Verbindung zwischen dem Hohlrad und der Getriebeabtriebswelle entlastet werden. Das Hohlrad kann über die Getriebeabtriebswelle mittels des Freilaufelements mit dem Planetenträger drehfest verbindbar sein.

Erfindungsgemäß ist es vorgesehen, dass der Fahrradantrieb eine Dichtscheibe aufweist, welche radial innerhalb des Hohlrads angeordnet ist. Die Dichtscheibe kann den Planetenradsatz und auch insgesamt das Planetengetriebe vor Staub und Wasser schützen, indem beispielsweise ein Innenraum abgedichtet wird. Die Dichtscheibe kann den Planetenradsatz auf einer axial zur Getriebeabtriebswelle abgewandten Seite abdichten, was eine der Elektromaschine axial zugewandte Seite sein kann. Die Dichtschreibe kann zwischen dem Hohlrad und dem Elektromaschinengehäuse angeordnet sein. Die Dichtschreibe kann alternativ oder zusätzlich zwischen dem Hohlrad und dem Sonnenrad angeordnet sein. Die Dichtscheibe kann alternativ oder zusätzlich zwischen dem Hohlrad und der Lagerung des Sonnenrads an dem Elektromaschinengehäuse angeordnet sein. Der Planetenradsatz und auch insgesamt das Planetengetriebe können auf einer axial der Dichtscheibe abgewandten Seite durch ein Drehelement, wie beispielsweise das Hohlrad, und alternativ oder zusätzlich die Getriebeabtriebswelle, abgedichtet sein. Beispielsweise können die Dichtscheibe, die Lagerung des Sonnenrads an dem Elektromaschinengehäuse, das Elektromaschinengehäuse, das Hohlrad und die Getriebeabtriebswelle einen Innenraum des Planetenradsatzes definieren und diesen vor Staub und Wasser schützen.

In einer weiteren Ausführungsform des Fahrradantriebs ist es vorgesehen, dass der Fahrradantrieb eine Tretkurbelwelle aufweist, wobei ein Drehmoment von der Tretkurbelwelle an die Getriebeabtriebswelle übertragbar ist. Die Tretkurbelwelle kann sich beispielsweise quer komplett durch den Fahrradantrieb erstrecken. Die Tretkurbelwelle kann dazu ausgebildet sein, eine Muskelkraft an die Getriebeabtriebswelle zu übertragen. Der Fahrradantrieb kann Pedale aufweisen, welche mit der Tretkurbelwelle verbunden sind. Der Fahrradantrieb kann dazu ausgebildet sein, dass ein Fahrer des Fahrrads ein Drehmoment über die Pedale auf die Tretkurbelwelle aufbringen kann. Die Getriebeabtriebswelle kann dazu ausgebildet sein, die Muskelkraft an wenigstens ein Laufrad des Fahrrads zu übertragen.

Die Tretkurbelwelle kann mit der Abtriebswelle der Elektromaschine zur Drehmomentübertragung an die Getriebeabtriebswelle verbunden sein, beispielsweise permanent drehfest oder mittels eines weiteren Freilaufelements. Die Tretkurbelwelle kann auch unter Umgehung des Planetengetriebes mit der Getriebeabtriebswelle verbunden sein, beispielsweise permanent drehfest oder mittels eines weiteren Freilaufelements. Die Tretkurbelwelle kann auch mit der Getriebeabtriebswelle mechanisch wirkverbunden sein, beispielsweise permanent oder schaltbar mittels einer Stirnradstufe.

In einer weiteren Ausführungsform des Fahrradantriebs ist es vorgesehen, dass sich die Tretkurbelwelle durch das Planetengetriebe und die Elektromaschine hindurch erstreckt. Dadurch kann der Fahrradantrieb als Mittelmotor bei einem Pedelec eingesetzt werden. Jeweilige drehende Massen des Fahrrads können so besonders gering sein. Der Fahrradantrieb eignet sich so besonders gut für Stadträder und Falträder. Die Tretkurbelwelle kann beispielsweise koaxial mit der Abtriebswelle der Elektromaschine und alternativ oder zusätzlich dem Planetenradsatz angeordnet sein.

Ein zweiter Aspekt betrifft ein Fahrrad mit einem Fahrradantrieb gemäß dem ersten Aspekt. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Das Fahrrad kann ein Laufrad aufweisen. Die Getriebeabtriebswelle kann mit dem Laufrad mechanisch wirkverbindbar sein, insbesondere permanent mechanisch wirkverbunden, sein. Beispielsweise kann die Abtriebswelle über eine Kette oder alternativ über einen Riemen mit dem Laufrad mechanisch wirkverbindbar sein. In dem Laufrad kann beispielsweise ein weiteres Freilaufelement vorgesehen sein, damit das Fahrrad ohne Bewegen des Fahrradantriebs rollen kann.

### Kurze Beschreibung der Figuren

- Fig. 1: zeigt schematisch einen Fahrradantrieb in einer Seitenansicht, wobei ein Planetengetriebe des Fahrradantriebs geschnitten dargestellt ist.
- Fig. 2: zeigt schematisch den Fahrradantrieb gemäß Fig. 1 in einer Perspektivansicht.
- Fig. 3: zeigt schematisch den Fahrradantrieb gemäß Fig. 1 in der Perspektivansicht von Fig. 2, wobei eine Getriebeabtriebswelle nicht dargestellt ist.

### Detaillierte Beschreibung von Ausführungsformen

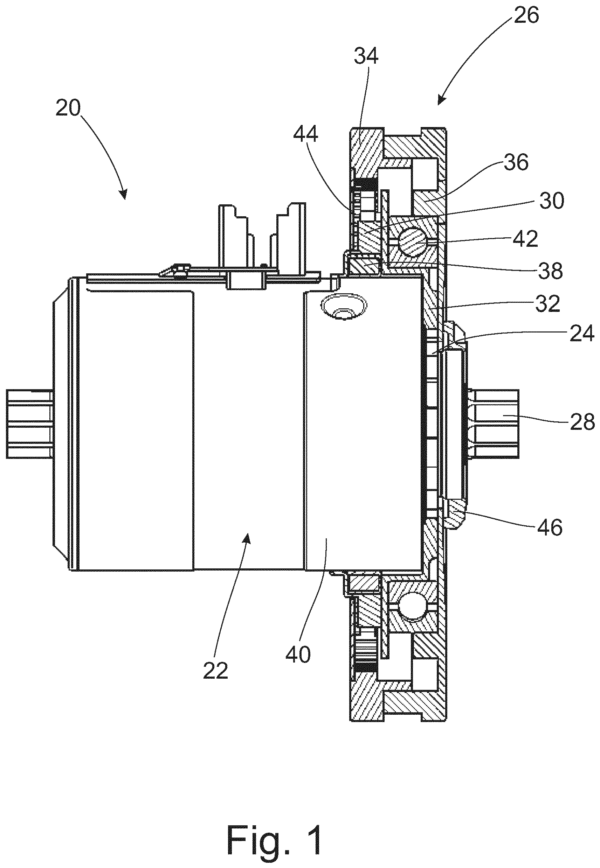

Fig. 1 zeigt schematisch einen Fahrradantrieb 20 in einer Seitenansicht. Der Fahrradantrieb 20 weist eine Elektromaschine 22 mit einer Abtriebswelle 24 auf. Zudem weist der Fahrradantrieb 20 ein Planetengetriebe 26 und eine Tretkurbelwelle 28 auf. Die Tretkurbelwelle 28 erstreckt sich quer koaxial zu der Abtriebswelle 24 und dem Planetengetriebe 26 durch die Elektromaschine 22 und das Planetengetriebe 26 hindurch.

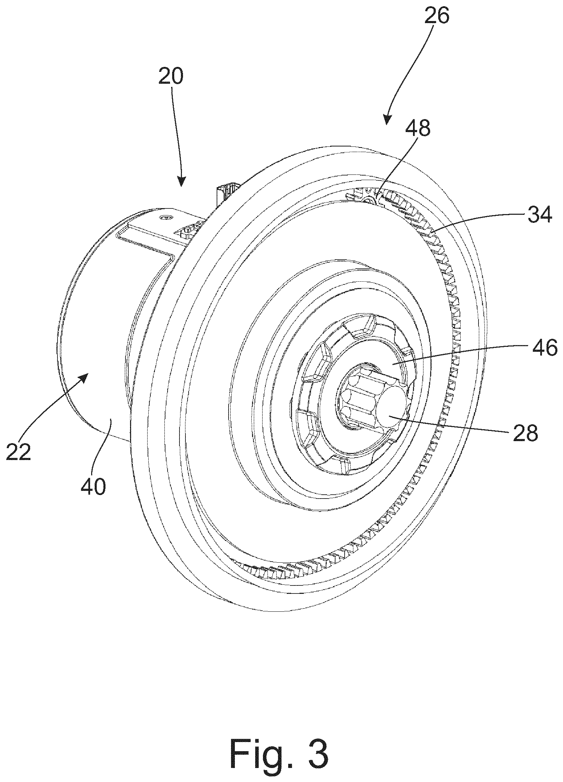

Das Planetengetriebe 26 weist einen Planetenradsatz mit einem Sonnenrad 30, einem Planetenträger 32 und einem Hohlrad 34 auf. An dem Planetenträger 32 ist ein Satz aus drei Planetenrädern 48 drehbar gelagert, von denen lediglich ein Planetenrad 48 in der Fig. 3 zu sehen ist. Die Planetenräder 48 kämmen jeweils mit dem Sonnenrad 30 und dem Hohlrad 34.

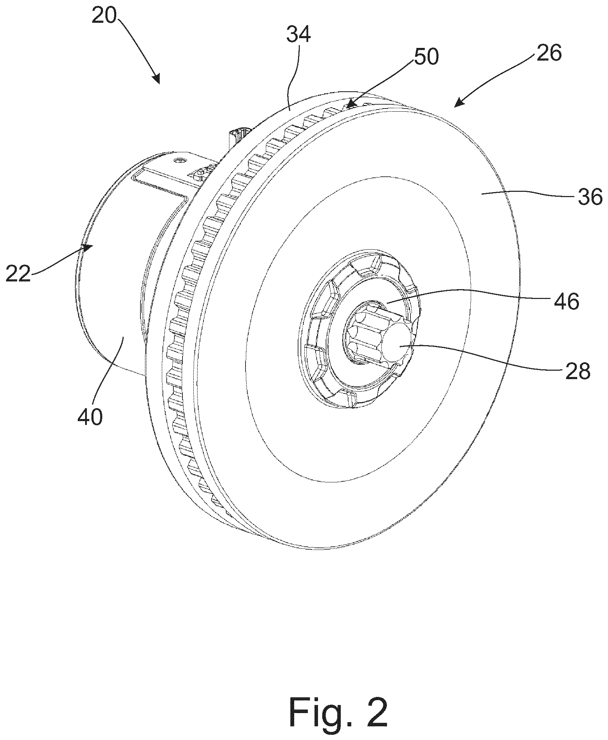

Mit dem Hohlrad 34 ist eine Getriebeabtriebswelle 36 axial an einer der Elektromaschine 22 abgewandten Seite permanent drehfest verbunden. Die Getriebeabtriebswelle 36 bildet radial außenseitig eine Verzahnung 50 aus, was gut in Fig. 2 zu erkennen ist. Mit dieser Verzahnung kann ein Riemen eingreifen, mittels welchem die Getriebeabtriebswelle 36 mit einem Laufrad des Fahrrads mechanisch wirkverbunden wird.

Die Abtriebswelle 24 weist radial außen eine Verzahnung auf. Mit dieser Verzahnung greift eine radial innere Verzahnung des Planetenträgers 32 ein. Damit ist die Abtriebswelle 24 mit dem Planetenträger 32 permanent drehfest verbunden. So kann ein Drehmoment von der Elektromaschine 22 in das Planetengetriebe 26 eingeleitet werden.

Das Planetengetriebe 26 weist ein erstes Wälzlager 38 auf, mittels welchem das Sonnenrad 30 an einem Elektromaschinengehäuse 40 der Elektromaschine 22 gelagert ist. Das erste Wälzlager 38 ist als Rollenlager ausgebildet. In dem ersten Wälzlager 38 ist ein Schaltelement integriert. Mittels des Schaltelements ist das Sonnenrad 30 an dem Elektromaschinengehäuse 40 festsetzbar.

Das Planetengetriebe 26 weist ein zweites Wälzlager 42 auf, mittels welchem die Getriebeabtriebswelle 36 an dem Planetenträger 32 gelagert ist. In dem zweiten Wälzlager 42 ist ein Freilaufelement integriert. Mittels des Freilaufelements ist die Getriebeabtriebswelle 36 und damit auch das Hohlrad 34 in Abhängigkeit der relativen Drehrichtung mit dem Planetenträger 32 drehfest verbindbar. Das zweite Wälzlager 42 stützt die Getriebeabtriebswelle 36, wodurch eine Verbindung mit dem Hohlrad 34 entlastet wird und zudem über die Verzahnung 50 weniger Kippkräfte in den Planetenradsatz eingeleitet werden.

Sofern das Sonnenrad 30 nicht an dem Elektromaschinengehäuse 40 festgesetzt ist und eine Antriebskraft durch die Elektromaschine 22 bereitgestellt wird, befindet sich das Freilaufelement in einem Sperrrichtungszustand. Der Planetenradsatz ist entsprechend verblockt, wodurch ein erster Gang als Getriebeübersetzung bereitgestellt wird. Sofern das Sonnenrad 30 mittels des Schaltelements festgesetzt ist, kann weiterhin der Planetenträger 32 von der Elektromaschine 22 angetrieben werden. Die Planetenräder rollen dann an dem Sonnenrad 30 ab und treiben das Hohlrad 34 an. Das Hohlrad 34 dreht sich somit schneller als der Planetenträger 32. Durch ein solches Überholen des Planetenträgers 32 wechselt das Freilaufelement selbsttätig von dem Sperrrichtungszustand in einen Überholtriebzustand. Die drehfeste Verbindung zwischen dem Planetenträger 32 und dem Hohlrad 34 mittels des Freilaufelements über die Getriebeabtriebswelle 36 ist so aufgehoben. So kann ein zweiter Gang mit einer höheren Übersetzung als beim ersten Gang als Getriebeübersetzung bereitgestellt werden.

Das Planetengetriebe 26 ist auf seiner der Getriebeabtriebswelle 36 abgewandten Seite durch eine Dichtscheibe 44 abgedichtet. Die Dichtscheibe 44 erstreckt sich dabei radial zwischen dem ersten Wälzlager 38 und dem Hohlrad 34. Auf der axial entgegengesetzten Seite ist das Planetengetriebe 26 durch die Getriebeabtriebswelle 36 und einen Deckel 46 abgeschlossen. Der Deckel 46 dient in der gezeigten Ausführungsform auch zur Befestigung des Planetengetriebes 26 an der Elektromaschine 22.

### Bezugszeichen

- 20: Fahrradantrieb
- 22: Elektromaschine
- 24: Abtriebswelle
- 26: Planetengetriebe
- 28: Tretkurbelwelle
- 30: Sonnenrad
- 32: Planetenträger
- 34: Hohlrad
- 36: Getriebeabtriebswelle
- 38: erstes Wälzlager
- 40: Elektromaschinengehäuse
- 42: zweites Wälzlager
- 44: Dichtscheibe
- 46: Deckel
- 48: Planetenräder
- 50: Verzahnung

## Patentansprüche

1. Fahrradantrieb (20) mit einer Elektromaschine (22), welche eine Abtriebswelle (24) aufweist, und einem Planetengetriebe (26), welches eine Getriebeabtriebswelle (36), ein erstes Schaltelement, ein Freilaufelement und einen Planetenradsatz mit einem Sonnenrad (30), einem Planetenträger (32) und einem Hohlrad (34) aufweist, wobei die Abtriebswelle (24) mit dem Planetenträger (32) permanent drehfest verbunden ist, das Sonnenrad (30) mittels des Schaltelements festsetzbar ist und der Planetenträger (32) mit dem Hohlrad (34) mittels des Freilaufelements drehfest verbindbar ist, **dadurch gekennzeichnet, dass** der Fahrradantrieb (20) eine Dichtscheibe (44) aufweist, welche radial innerhalb des Hohlrads (34) angeordnet ist.

2. Fahrradantrieb (20) nach Anspruch 1, **dadurch gekennzeichnet, dass** das Planetengetriebe (26) dazu ausgebildet ist, eine erste Getriebeübersetzung bereitzustellen, wenn das Sonnenrad (30) mittels des ersten Schaltelements festgesetzt ist, und eine zweite Getriebeübersetzung bereitzustellen, wenn das Sonnenrad (30) mittels des ersten Schaltelements freigegeben ist.

3. Fahrradantrieb (20) nach Anspruch 1 oder 2, **dadurch gekennzeichnet, dass** die Abtriebswelle (24) mit dem Planetenträger (32) mittels einer Verzahnung permanent drehfest verbunden ist.

4. Fahrradantrieb (20) nach einem der vorgehenden Ansprüche, **dadurch gekennzeichnet, dass** die Elektromaschine (22) ein Elektromaschinengehäuse (40) aufweist und das Sonnenrad (30) mittels des ersten Schaltelements an dem Elektromaschinengehäuse (40) festsetzbar ist.

5. Fahrradantrieb (20) nach Anspruch 4, **dadurch gekennzeichnet, dass** das Sonnenrad (30) mittels eines Wälzlagers (38) an dem Elektromaschinengehäuse (40) drehbar gelagert ist.

6. Fahrradantrieb (20) nach einem der vorgehenden Ansprüche, **dadurch gekennzeichnet, dass** die Getriebeabtriebswelle (36) mittels des Freilaufelements an dem Planetenträger (32) gelagert ist.

7. Fahrradantrieb (20) nach einem der vorgehenden Ansprüche, **dadurch gekennzeichnet, dass** der Fahrradantrieb (20) eine Tretkurbelwelle (28) aufweist, wobei ein Drehmoment von der Tretkurbelwelle (28) an die Getriebeabtriebswelle (36) übertragbar ist.

8. Fahrradantrieb (20) nach Anspruch 7, **dadurch gekennzeichnet, dass** sich die Tretkurbelwelle (28) durch das Planetengetriebe (26) und die Elektromaschine (22) hindurch erstreckt.

9. Fahrrad mit einem Fahrradantrieb (20) nach einem der vorhergehenden Ansprüche, wobei die Getriebeabtriebswelle (36) mit einem Laufrad des Fahrrads mechanisch wirkverbindbar ist.

## Claims

1. Bicycle drive (20) with an electric machine (22) which has an output shaft (24), and a planetary gear (26) which has a gear output shaft (36), a first shifting element, a freewheel element and a planetary gear set with a sun gear (30), a planetary carrier (32) and a ring gear (34), wherein the output shaft (24) is permanently connected fixedly to the planetary carrier (32) for conjoint rotation, the sun gear (30) can be arrested by means of the shifting element, and the planetary carrier (32) can be connected by means of the freewheel element fixedly to the ring gear (34) for conjoint rotation, **characterized in that** the bicycle drive (20) has a sealing washer (44) which is arranged radially within the ring gear (34).

2. Bicycle drive (20) according to Claim 1, **characterized in that** the planetary gear (26) is designed to provide a first gear ratio when the sun gear (30) is arrested by means of the first shifting element, and a second gear ratio when the sun gear (30) is released by means of the first shifting element.

3. Bicycle drive (20) according to Claim 1 or 2, **characterized in that** the output shaft (24) is permanently connected by means of a toothing system fixedly to the planetary carrier (32) for conjoint rotation.

4. Bicycle drive (20) according to one of the preceding claims, **characterized in that** the electric machine (22) has an electric machine housing (40), and the sun gear (30) can be arrested on the electric machine housing (40) by means of the first shifting element.

5. Bicycle drive (20) according to Claim 4, **characterized in that** the sun gear (30) is rotatably mounted on the electric machine housing (40) by means of an anti-friction bearing (38).

6. Bicycle drive (20) according to one of the preceding claims, **characterized in that** the gear output shaft (36) is mounted on the planetary carrier (32) by means of the freewheel element.

7. Bicycle drive (20) according to one of the preceding claims, **characterized in that** the bicycle drive (20) has a pedal crank shaft (28), wherein a torque is transferable from the pedal crank shaft (28) to the gear output shaft (36).

8. Bicycle drive (20) according to Claim 7, **characterized in that** the pedal crank shaft (28) extends through the planetary gear (26) and the electric machine (22).

9. Bicycle with a bicycle drive (20) according to one of the preceding claims, wherein the gear output shaft (36) is mechanically connectable operatively to a wheel of the bicycle.

## Revendications

1. Entraînement de bicyclette (20) comprenant un moteur électrique (22), lequel possède un arbre de sortie (24) et un engrenage planétaire (26), lequel possède un arbre de sortie d'engrenage (36), un premier élément de commutation, un élément de roue libre et un train d'engrenages planétaires avec une roue solaire (30), un porte-satellites (32) et une couronne à denture interne (34), l'arbre de sortie (24) étant relié de manière solidaire en rotation au porte-satellites (32), la roue solaire (30) pouvant être bloquée au moyen de l'élément de commutation et le porte-satellites (32) pouvant être relié de manière solidaire en rotation à la couronne à denture interne (34) au moyen de l'élément de roue libre, **caractérisé en ce que** l'entraînement de bicyclette (20) comporte un disque d'étanchéité (44) qui est disposé radialement à l'intérieur de la couronne à denture interne (34).

2. Entraînement de bicyclette (20) selon la revendication 1, **caractérisé en ce que** l'engrenage planétaire (26) est configuré pour fournir un premier rapport de transmission lorsque la roue solaire (30) est bloquée au moyen du premier élément de commutation et pour fournir un deuxième rapport de transmission lorsque la roue solaire (30) est débloquée au moyen du premier élément de commutation.

3. Entraînement de bicyclette (20) selon la revendication 1 ou 2, **caractérisé en ce que** l'arbre de sortie (24) est relié de manière solidaire en rotation au porte-satellites (32) au moyen d'une denture.

4. Entraînement de bicyclette (20) selon l'une des revendications précédentes, **caractérisé en ce que** la machine électrique (22) possède un boîtier de machine électrique (40) et la roue solaire (30) peut être bloquée sur le boîtier de machine électrique (40) au moyen du premier élément de commutation.

5. Entraînement de bicyclette (20) selon la revendication 4, **caractérisé en ce que** la roue solaire (30) est montée de manière rotative sur le boîtier de machine électrique (40) au moyen d'un palier à roulement (38).

6. Entraînement de bicyclette (20) selon l'une des revendications précédentes, **caractérisé en ce que** l'arbre de sortie d'engrenage (36) est monté sur le porte-satellites (32) au moyen de l'élément de roue libre.

7. Entraînement de bicyclette (20) selon l'une des revendications précédentes, **caractérisé en ce que** l'entraînement de bicyclette (20) comprend un arbre de pédalier (28), un couple pouvant être transmis de l'arbre de pédalier (28) à l'arbre de sortie d'engrenage (36).

8. Entraînement de bicyclette (20) selon la revendication 7, **caractérisé en ce que** l'arbre de pédalier (28) s'étend à travers l'engrenage planétaire (26) et le moteur électrique (22).

9. Bicyclette comprenant un entraînement de bicyclette (20) selon l'une des revendications précédentes, l'arbre de sortie d'engrenage (36) pouvant être relié activement mécaniquement à une roue de la bicyclette.
